(19) Europäisches Patentamt
European Patent Office
Office européen des brevets

(11) Publication number: 0 177 791 B1

# (12) EUROPEAN PATENT SPECIFICATION

(45) Date of publication of patent specification: 16.08.90

(51) Int. Cl.$^5$: C 09 D 4/02, C 09 D 163/10, C 08 F 220/00, C 08 F 299/02

(21) Application number: 85111514.7

(22) Date of filing: 12.09.85

## (54) Radiation curable primer coating compositions.

(30) Priority: 13.09.84 JP 191936/84

(43) Date of publication of application: 16.04.86 Bulletin 86/16

(45) Publication of the grant of the patent: 16.08.90 Bulletin 90/33

(84) Designated Contracting States: DE FR GB IT

(56) References cited: US-A-4 178 425

(73) Proprietor: SUMITOMO METAL INDUSTRIES, LTD.
15, Kitahama 5-chome Higashi-ku
Osaka-shi, Osaka, 541 (JP)

(73) Proprietor: Nippon Paint Co., Ltd.
2-1-2, Oyodokita Oyodo-ku
Osaka-shi Osaka-fu (JP)

(72) Inventor: Yamada, Koichi
13 Yawata Baba
Yawata-shi Kyoto-fu (JP)
Inventor: Sumiyoshi, Iwao
2-6-16, Aikawa Higashiyodogawa-ku
Osaka (JP)
Inventor: Ishihara. Ryoji
2-15-505, Nakamiyakitamachi
Hirakata-shi Osaka-fu (JP)
Inventor: Ohkita, Masakazu
No. 502, 1-8-31 Minamitanabe
Higashisumiyoshi-ku Osaka (JP)
Inventor: Arai, Tetsuzo
16-11 Sakasedai 4-chome
Takarazuka-shi Hyogo-ken (JP)
Inventor: Yoshiiwa, Masanori
256-16 Nishinosho
Wakayama-shi Wakayama-ken (JP)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 177 791 B1

Courier Press, Leamington Spa, England.

(74) Representative: Kinzebach, Werner, Dr.
Patentanwälte Reitstötter, Kinzebach und Partner Sternwartstrasse 4 Postfach 86 06 49
D-8000 München 86 (DE)

**Description**

This invention relates to a radiation curable primer coating composition suitable for use in forming a polyolefin coating on a steel substrate.

Polyolefin coated steel pipes have been widely used as pipelines for conveying petroleum or natural gas. Since most of these pipelines are subjected to severe environmental conditions, high levels of adhesive and anticorrosive characteristics are required for the polyolefin coating layer.

Polyolefin resins are nonpolar and have crystalline nature and thus exhibit excellent chemical stability and excellent mechanical properties. However, their adhesion strength to a steel substrate are generally poor when polyolefin coatings are applied directly. It is for this reason that an adhesive layer consisting of a modified polyolefin such as ethylene-acrylic acid copolymers or ethylene-maleic anhydride copolymers is interposed between the polyolefin protective layer and the steel substrate. This modified polyolefin layer exhibits an excellent adhesion strength to the substrate but this adhesion strength tends to decrease as the coated products are exposed to severe corrosive environment. In order to avoid this usually epoxy based primers are applied on the substrate surface. Thus the entire operation for producing polyolefin coated steel pipes include the steps of polishing the substrate surface to remove oxide films using such techniques as sand blasting or shot blasting, subjecting to a surface treatment such as chromate treatment if necessary, applying the epoxy primer, and curing the primer by heating to a temperature from 130°C to 200°C using an induction heater or hot air oven. After the applied primer coating has been fully cured so that the coating film is not easily scratched or peeled off when contacted by conveying rolls, the pipes are passed to next conveying rolls for extrusion coating the interposing adhesive layer and the polyolefin outer layer successively.

Epoxy primer compositions currently used for this purpose require heating to a temperature above 130°C for about 3 to 4 minutes. This limits the productivity of polyolefin coated steel pipes when the coating is carried out while continuously conveying pipes axially. In order to convey substrate pipes smoothly, the distance between adjacent conveying rolls should be less than one half of the pipe length. Assuming that the distance between adjacent conveying rolls is 3 m and a curing time of 3 minutes is required for curing the epoxy primer coating, the conveying speed is limited to less than 1 m/minute.

In addition to low productivity, a substantial amount of heat energy is required for heating steel pipes.

It is therefore a principal object of the present invention to provide a primer coating composition free from these disadvantages for use in improving the adhesion strength of polyolefin layers to a steel substrate.

It is another object of the present invention to provide a primer coating composition of the above-mentioned type which cures within a very short length of time by irradiating an actinic radiation.

Other objects and advantages of the present invention will become apparent as the description proceeds.

According to the present invention, there is provided a primer coating composition which cures upon irradiation of an actinic radiation for improving the adhesion strength of polyolefin-based coating layer to a steel substrate. The composition comprises:

(a) a reaction product of an epoxide as defined below and an ethylenically unsaturated monocarboxylic acid (hereinafter referred to as "unsaturated epoxy ester");

(b) a compound of the formula:

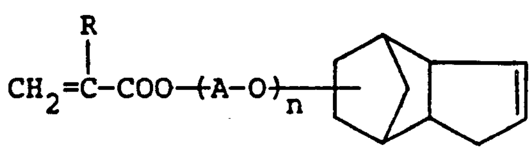

or

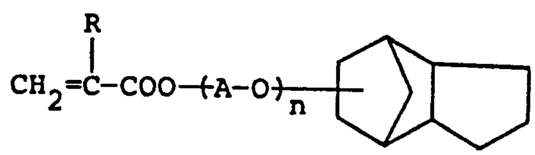

wherein R is hydrogen atom or methyl, A is a $C_2$—$C_4$ alkylene group, and n is 0, 1 or 2; and

(c) an epoxide compound as defined below having at least one epoxy group per molecule. The proportions of said components (a), (b) and (c) are preselected to give a cured coating film having a glass transition temperature higher than 45°C.

The composition may additionally contain a liquid monomer and/or oligomer as defined below capable of polymerizing upon irradiation of an actinic radiation.

The use of the primer coating composition of the present invention enables to significantly decrease the length of time required for curing the primer coating by the irradiation of an actinic radiation. Thus, the productivity of polyolefin coated steel pipes, for example, may be greatly increased and a large amount of heat energy required for preheating substrate pipes and/or thermally curing the primer coating may be saved.

(a) Unsaturated epoxy esters

Unsaturated epoxy esters constituting component (a) may be produced by reacting an epoxide compound with an ethylenically unsaturated monocarboxylic acid.

The epoxide compounds are selected from a reaction product of bisphenol A and epichlorohydrine or methylepichlorohydrine (hereinafter collectively referred to as "(methyl)epichlorohydrine"); a reaction product of bisphenol A and/or bisphenol F, resorcinol and (methyl)epichlorohydrine; a reaction product of novolak or resol typed phenol-formaldehyde condensate and (methyl)epichlorohydrine; a reaction product of a polyol and (methyl)epichlorohydrine; a reaction product of a polybasic acid and (methyl)epichlorohydrine; and a reaction product of a polyalkylene glycol and (methyl)epichlorohydrine.

These epoxide compounds may be reacted with a monobasic and/or dibasic carboxylic acid free of ethylenic unsaturation such as acetic acid, propionic acid, benzoic acid, succinic acid, adipic acid, dimer acid or phthalic acid using the epoxide compound in large excess so that the reaction product has at least one remaining epoxy group per molecule. The term "epoxide compound" as used herein include such reaction products as well.

Examples of ethylenically unsaturated monocarboxylic acid include acrylic acid, methacrylic acid, crotonic acid, cinnamic acid, itaconic acid monoalkyl esters such as methyl or ethyl ester and mixtures of these acids.

The unsaturated epoxy ester of component (a) may be prepared by reacting the epoxide compound and the ethylenically unsaturated monocarboxylic acid in about stoichiometric amounts. The reaction may be carried out by heating reactants at a temperature from 100°C to 130°C preferably in the presence of a catalytic amount of a tertiary amine such as N,N-dimethylaniline, pyridine, triethylamine, hexamethylenediamine or N,N-dimethylaminoethyl methacrylate. The reaction may be continued for 5 to 10 hours to give the desired unsaturated epoxy ester (a).

(b) Compounds of the formula

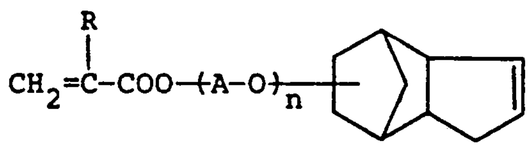 or

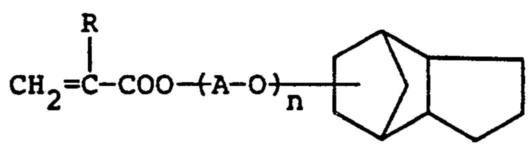 :

Examples of compounds of the above formula include dicyclopentenyl acrylate or methacrylate (hereinafter collectively referred to as "(meth)acrylate"), dicyclopentyl(meth)acrylate, dicyclopentenyloxyethyl(meth)acrylate, dicyclopentyloxyethyl(meth)acrylate, dicyclopentenyloxypropyl(meth)acrylate, dicyclopentyloxypropyl(meth)acrylate, dicyclopentenyloxyethoxyethyl(meth)acrylate, dicyclopentyloxyethoxyethyl(meth)acrylate and the like.

These compounds have a bulky structure and are useful to impart a relatively high glass transition temperature (Tg) to the fully cured coating film resulting from the primer composition of the present invention.

(c) Epoxide compounds having at least one epoxy group in the molecule

The same epoxide compounds as used for synthesizing unsaturated epoxy esters (a) may be employed as component (c). Component (c) is used in an amount at least equal to a stoichiometric amount relative to the acid number of component (a) corresponding to the residual free carboxylic groups. By adding this component, the anti-alkali property of the resulting coating film may be enhanced.

The proportions of components (a), (b) and (c) are preferably 40—80 parts/20—60 parts/1—15 parts on weight basis.

The primer coating composition of the present invention may additionally contain a liquid monomer and/or oligomer capable of curing upon the irradiation of an actinic radiation.

The monomers are selected from methyl(meth)acrylate, ethyl(meth)acrylate, n-butyl(meth)acrylate, isobutyl(meth)acrylate, n-hexyl(meth)acrylate, 2-ethylhexyl(meth)acrylate, cyclohexyl(meth)acrylate, benzyl(meth)acrylate, 2-hydroxyethyl(meth)acrylate, 2-hydroxypropyl(meth)acrylate, 2-methoxyethyl(meth)acrylate, 2-ethoxyethyl(meth)acrylate, carbitol(meth)acrylate, dipropylene glycol monomethyl ether mono(meth)acrylate, triethylene glycol monomethyl ether mono(meth)acrylate, tetrahydrofuryl(meth)acrylate, styrene, α-methylstyrene, vinyltoluene, ethylene glycol di(meth)acrylate, diethylene glycol di(meth)acrylate, propylene glycol di(meth)acrylate, 1,6-hexanediol di(meth)acrylate, neopentyl glycol di(meth)acrylate, trimethylpropane tri(meth)acrylate and the like.

Examples of oligomers include unsaturated polyesters such as a condensate of phthalic acid, diethylene glycol and acrylic acid, and unsaturated polyurethanes such as produced by reacting one mole of trimethylolpropane, 3 moles of tolylenediisocyanate and 3 moles of 2-hydroxyethyl(meth)acrylate.

These monomers and oligomers are used for adjusting the viscosity of the primer composition and for adjusting Tg of the resulting film. However, excessive use of these monomers and/or oligomers tends to decrease the adhesion strength to the steel substrate. Accordingly, the combined amount of these monomers and/or oligomers plus component (b) should not exceed 60 parts by weight per 100 parts by weight of the entire composition.

The proportions of above-mentioned essential and optional components are preselected so that the composition gives a cured film having a Tg above 45°C. This is because polyolefin coatings applied on steel pipes, for example, require a high adhesion strength at elevated temperatures.

When the primer coating composition is cured by the irradiation of ultraviolet light, it is necessary for the composition to contain a photosensitizer. Any known photosensitizer may be used including benzoin, benzoin methyl ether, benzoin isopropyl ether, anthraquinone, 2-ethylanthraquinone, benzophenone, acetophenone, 2,2-diethoxy-2-phenylacetophenone, 2-chlorothioxanthone, 2-methylthioxanthone, benzyl-dimethylketal, 2-hydroxy-2-methyl-1-phenylpropan-1-one and mixtures of these photosensitizers. These photosensitizers may be added in an amount from 0.1 to 2.0% by weight of the entire composition to accelerate the photochemical reaction involved.

The primer coating composition may contain, of course, other conventional additives such as antifoaming agents, anti-running agents, surface conditioning agents, anticorrosive agents, fillers, colorants, solvents and the like to such a extent that these additives do not adversely affect the properties of the primer coating.

Any known technique may be employed for applying the primer coating composition of the present invention onto substrates such as steel pipes. These include airless spraying, roller coating, brushing, drawing and the like.

The primer coatings applied on a substrate may be cured by exposing to an actinic radiation. Ultraviolet light, electron radiation, X-rays or gamma rays may be employed. Electron accelerators, $Co^{60}$, X-ray generators and UV lamps may be used as radiation sources. As a UV source, high pressure mercury lamps, low pressure mercury lamps, ultra-high pressure mercury lamps, metal halide lamps or xenone lamps may be used. UV light or electron radiation is preferable when rapid curing time is required. The curing may be carried out in the atmosphere since the inhibitory effect of air on the polymerization reaction is not substantial. However, the use of inert gas atmosphere such as nitrogen gas atmosphere is more preferable for exhancing the curability of the primer coating. The length of curing time varies depending upon the nature and intensity of radiation used. For example, by the use of a plurality of 6 kW high pressure mercury lamps placed to achieve uniform irradiation onto the coated surface, it is possible to finish the curing within 1—10 seconds.

Polyolefin coated steel pipes may be produced by the conventional method by extrusion coating the substrate first with modified polyolefin adhesive layer and then with polyolefin protective layer. Prior to applying the primer coating, the substrate surface may be provided with conventional conversion coatings such as phosphate or chromate conversion coatings by dipping the substrate in a treating bath or applying a treating liquid containing silica sol. This treatment may further improve the adhesion strength and cathodic desbonding resistance of the resulting polyolefin coated steel pipes when combined with the application of the primer coating of this invention.

The following examples are intended to illustrate the present invention in further detail. In these examples, all parts and percents are by weight.

### Example 1

A flask having a stirrer, a reflux condenser, a thermometer and a drip funnel was charged with 950 g of epichlorohydrine-bisphenol A epoxy resin (about 2 epoxy equivalents), 729 g of dicyclopentenyl acrylate, 1.8 g of hydroquinone and 9.1 g of N,N-dimethylaminoethyl acrylate. The mixture was heated to 100°C. Then 144 g (2 moles) of acrylic acid was added with stirring over 1 hour and reacted for additional 5 hours at the same temperature. The acid number of the resulting resin composition was 3.

### Example 2

The same flask as used in Example 1 was charged with 1900 g of epichlorohydrine-bisphenol A epoxy resin (about 2 epoxy equivalents), 1363 g of dicyclopentyl acrylate, 3.4 g of hydroquinone, and 17.0 g of N,N-dimethylaminoethyl acrylate. The mixture was heated to 100°C. Then 144 g (2 moles) of acrylic acid was added with stirring over 1 hour and reacted for additional 5 hours at the same temperature. The acid number of the resulting resin composition was 3.5.

### Example 3

The same flask as used in Example 1 was charged with 1884 g of epichlorohydrine-bisphenol A-resorcinol epoxy resin (about 2 epoxy equivalents), 1352 g of dicyclopentenyl acrylate, 3.4 g of hydroquinone and 16.9 g of N,N-dimethylaminoethyl acrylate. The mixture was heated to 100°C. Then

144 g (2 moles) of acrylic acid was added with stirring over 1 hour and reacted for additional 5 hours at the same temperature. The acid number of the resulting resin composition was 2.8.

Example 4

The flask as used in Example 1 was charged with 1884 g (about 2 epoxy equivalents) of epichlorohydrin-bisphenol A-resorcinol epoxy resin, 1352 g of dicyclopentenyloxyethyl acrylate, 3.4 g of hydroquinone and 16.9 g of N,N-dimethylaminoethyl acrylate. The mixture was heated to 100°C. Then 144 g (2 moles) of acrylic acid was added with stirring over 1 hour and reacted at the same temperature for additional 5 hours. The acid number of the resulting resin composition was 3.1.

Example 5

The procedure of Example 4 was repeated except that an equivalent amount of dicyclopentenyloxyethoxyethyl acrylate was used as Component (b). An acid number of 3.4 was obtained.

Example 6 (Control)

The procedure of Example 3 was repeated except that 1352 g of carbitol acrylate was used instead of dicyclopentenylacrylate. The acid number of the product was 2.8.

Examples 7—13 and Comparative Examples 1—2

A primer coating composition shown in Table I was applied on a steel plate of 3.2 × 70 × 150 mm size having a polished surface by sand blasting. The coating film was cured by irradiating UV light. A 2 kW high pressure mercury lamp (Japan Storage Battery Co., Ltd., Model HI—20N, light emission length 25 cm, equipped with a beam collector) was placed over a conveyer at a height of 8 cm. The coated plate was conveyed under the lamp in a direction transverse to the longitudinal axis of the lamp at a speed of 3 m/minutes.

Then a sheet of modified polyethylene (ADMER NE 050, Mitsui Petrochemical Industries, Ltd.) was heat bonded over the primer coating at 170°C to form a layer having a thickness of 300—400 microns. Finally a preheated polyethylene film (low density polyethylene film having a melt index of 1.5, a density of 0.925 and a film thickness 3—4 mm) was lined by pressing the film against the steel plate at a pressure of 0.1 kg/$cm^2$ at a temperature of 170°C for 2 minutes.

In Comparative Example 2, modified polyethylene coating was directly applied onto the sand blasted steel plate without applying any primer coating composition.

In Example 13, prior to applying the primer coating, the steel plate was preheated to a temperature of 50—60°C, coated with a chromate based conversion coating liquid (prepared by mixing an aqueous solution of $CrO_3$ with ethylene glycol sufficient to reduce 40% of $CrO_3$ and further adding thereto colloidal silica having a particle size of 14 mμ) and allowed to stand until the applied coating was dried by the latent heat of the plate. The amount of coating was 1000—1200 mg/$m^2$ after drying.

The resulting polyolefin coated plates were tested on adhesion strength and cathodic desbonding resistance according to the following methods. The results obtained are shown in Table II.

Test Method

1. *Primary adhesion strength*

The coating was scratched to form a plurality of parallel cut lines at a distance between lines of 10 mm to the full depth of the coating. A section of cut polyethylene film was peeled from the steel plate and its peel strength (adhesion strength) at 180° angle was measured at 20°C and 60°C respectively at a pulling speed of 10 mm/minutes using TENSILON tester.

2. *Secondary adhesion strength*

The same test as above was repeated except that the scratched sample was soaked in 3% saline for 1,000 hours at 60°C, taken out and tested on the peel strength at 20°C.

3. *Cathodic desbonding resistance*

The coated plate was provided with a plurality of holes having a diameter of 5 mm through the coating layer to expose the substrate surface in these areas. Then the sample plate was placed in 3% saline at for 30 days at 20°C and a voltage was applied to the sample plate so that a potential of −1.5 volt was established relative to a standard $Cu/CuSO_4$ electrode. The degree of desbonding was judged by a distance through which a knife edge was penetrated.

Table I

Primer Formulations

| Components (parts) | Ex. 7 | Ex. 8 | Ex. 9 | Ex. 10 | Ex. 11 | Ex. 12 | Ex. 13 | Comparative Ex. 1 |
|---|---|---|---|---|---|---|---|---|
| Resin Ex. 1 | 100 | | | | | | | |
| " Ex. 2 | | 100 | | | | | | |
| " Ex. 3 | | | 80 | | | | | |
| " Ex. 4 | | | | 100 | | 100 | 100 | |
| " Ex. 5 | | | | | 100 | | | |
| " Ex. 6 | | | | | | | | 100 |
| NK ester ABPE-4 1) | | | 20 | | | | | |
| EPIKOTE 828 2) | 1 | 1 | 1 | 1 | 1 | 3 | 3 | 1 |
| Contents (parts) | | | | | | | | |
| (a) Unsaturated epoxy ester | 60 | 60 | 48 | 60 | 60 | 60 | 60 | 60 |
| (b) DCPD ester + Monomer | 40 | 40 | 32 | 40 | 40 | 40 | 40 | 40 |
| (c) Epoxide | 1 | 1 | 1 | 1 | 1 | 3 | 3 | 1 |
| Photosensitizer 3) (parts) | 5 | 5 | 5 | 5 | 5 | 5 | 5 | 5 |
| Tg, °C 4) | 68 | 63 | 68 | 57 | 50 | 55 | 55 | 43 |

Remarks:

1) 2,2-bis 4-acryloyloxy-poly(ethyleneoxy)-phenyl propane, Shin Nakamura Kagaku Kubushiki Kaisha.
2) Epichlorohydrine-bisphenol A epoxy resin, Shell Chemical.
3) Benzoin isobutyl ether.
4) Measured according to TMA penetration method using Shimadzu thermal analyzer Model DT—30.

Table II

Test Results

| Primary Adhesion Strength (kg/cm) | Ex. 7 | Ex. 8 | Ex. 9 | Ex. 10 | Ex. 11 | Ex. 12 | Ex. 13 | Comparative Ex. 1 | Comparative Ex. 2 |
|---|---|---|---|---|---|---|---|---|---|
| at 20°C | 25 | 27 | 21 | 24 | 18 | 20 | >30 | 15 | peeled off |
| at 60°C | 15 | 18 | 12 | 16 | 10 | 12 | 19 | peeled off | peeled off |
| Secondary Adhesion Strength (kg/cm, 20°C) | 10 | 11 | 13 | 13 | 9 | 9 | 17 | peeled off | peeled off |
| Cathodic desbonding resistance (mm) | 8 | 6 | 10 | 5 | 5 | 3 | 1.5 | 9 | 25 |

As shown in Table II, polyolefin coated steel substrates having a primer coating of the present invention (Examples 7 through 13) are superior to a corresponding polyolefin coated substrate having no primer coating (Comparative Example 3) in terms of the adhesion strength and cathodic desbonding resistance. When the primer coating has a Tg less than 45°C (Comparative Example 1), the secondary adhesion strength is not satisfactory. The conversion coating of the substrate prior to the application of primer coating (Example 13) further improves the cathodic desbonding resistance.

**Claims**

1. A radiation curable primer coating composition for use in forming polyolefin coating on a steel substrate comprising:

(a) a reaction product of an epoxide compound and an ethylenically unsaturated monocarboxylic acid, the epoxide compound being selected from the group consisting of a reaction product of bisphenol A and epichlorohydrine or methylepichlorohydrine; a reaction product of bisphenol A and/or bisphenol F, resorcinol and (methyl)epichlorohydrine; a reaction product of novolak or resol type phenol-formaldehyde condensate and (methyl)epichlorohydrine; a reaction product of a polyol and (methyl)epichlorohydrine; a reaction product of a polybasic acid and (methyl)epichlorohydrine; and a reaction product of a polyalkylene glycol and (methyl)epichlorohydrine;

(b) a compound of the formula:

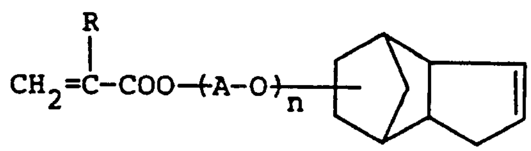 or

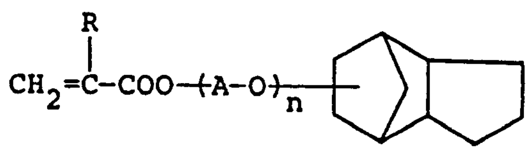

wherein R is hydrogen atom or methyl, A is a $C_2$—$C_4$ alkylene group, and n is 0, 1 or 2; and

(c) an epoxide compound as defined above wherein the ratio of said component (a):component (b):component (c) is 40—80:20—60:1—15 on weight basis.

2. The radiation curable primer coating composition according to Claim 1 further comprising a radiation polymerizable liquid monomer selected from the group consisting of methyl(meth)acrylate, ethyl(meth)acrylate, n-butyl(meth)acrylate, isobutyl(meth)acrylate, n-hexyl(meth)acrylate, 2-ethylhexyl(meth)acrylate, cyclohexyl(meth)acrylate, benzyl(meth)acrylate, 2-hydroxyethyl(meth)acrylate, 2-hydroxypropyl(meth)acrylate, 2-methoxyethyl(meth)acrylate, 2-ethoxyethyl(meth)acrylate, carbitol(meth)-acrylate, dipropylene glycol monomethyl ether mono(meth)acrylate, triethylene glycol monomethyl ether mono(meth)acrylate, tetrahydrofuryl(meth)acrylate, styrene, α-methylstyrene, vinyltoluene, ethylene glycol di(meth)acrylate, diethylene glycol di(meth)acrylate, propylene glycol di(meth)acrylate, 1,6-hexanedioldi(meth)acrylate, neopentyl glycol di(meth)acrylate and trimethylpropane tri(meth)acrylate and/or a radiation polymerizable liquid oligomer selected from unsaturated polyesters and polyurethanes wherein the combined amount of said component (b) and said monomer and/or oligomer is less than 60 parts per 100 parts by weight of the entire composition.

3. The radiation curable primer coating composition according to Claim 1, wherein said component (a) is a reaction product of said epoxide compound and acrylic acid or methacrylic acid.

4. The radiation curable primer coating composition according to claim 3, wherein said component (b) is dicyclopentenyl acrylate, dicyclopentyl acrylate, dicyclopentenyloxyethyl acrylate, dicyclopentyloxyethyl acrylate, dicyclopentenyloxyethoxyethyl acrylate, dicyclopentyloxyethoxyethyl acrylate or corresponding esters of methacrylic acid.

5. The radiation curable primer coating composition according to any one of claims 1 to 4 further comprising a photosensitizer.

6. A method of forming a polyolefin protective coating on a steel substrate comprising the steps of extrusion coating the substrate with a modified polyolefin layer and then with a polyolefin protective layer successively, the improvement wherein said substrate is given a primer coating by applying the radiation curable composition of claims 1—5 and then irradiating with an actinic radiation.

7. The method according to Claim 6, wherein said actinic radiation is ultraviolet light, and wherein the radiation curable composition of Claim 5 is employed.

8. The method according to Claims 6 or 7 further comprising the step of applying a conversion coating onto the substrate prior to the application of said primer coating.

9. The method according to any one of claims 6 to 8 wherein said substrate is a steel pipe or a steel sheet.

**Patentansprüche**

1. Durch Strahlung härtbare Primer-Beschichtungsmasse zur Verwendung bei der Herstellung von Polyolefin-Beschichtungen auf Stahlsubstraten umfassend:

(a) ein Reaktionsprodukt aus einer Epoxidverbindung und einer äthylenisch ungesättigten Monocarbonsäure, wobei die Epoxidverbindung ausgewählt ist aus der Gruppe bestehend aus einem Reaktionsprodukt aus Bisphenol A und Epichlorhydrin oder Methylepichlorhydrin; einem Reaktionsprodukt aus Bisphenol A und/oder Bisphenol F, Resorcin und (Methyl)epichlorhydrin; einem Reaktionsprodukt aus einem Phenol-Formaldehydkondensat vom Novolak- oder Resoltyp und (Methyl)epichlorhydrin; einem Reaktionsprodukt aus einem Polyol und (Methyl)epichlorhydrin; einem Reaktionsprodukt aus einer polybasischen Säure und (Methyl)epichlorhydrin; und einem Reaktionsprodukt aus einem Polyalkylenglykol und (Methyl)epichlorhydrin;

(b) eine Verbindung der Formel:

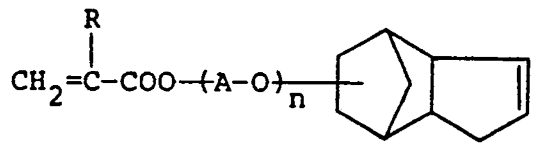

oder

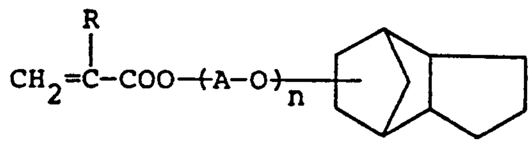

worin R ein Wasserstoffatom oder Methyl bedeutet, A eine $C_2$—$C_4$ Alkylengruppe bedeutet und n für Null, 1 oder 2 steht; und

(c) eine Epoxidverbindung wie oben beschrieben, wobei das Gewichtsverhältnis der Komponente (a):Komponente (b):Komponente (c) 40—80:20—60:1—15 ist.

2. Durch Strahlung härtbare Primer-Beschichtungsmasse nach Anspruch 1 weiterhin umfassend ein durch Strahlung polymerisierbares flüssiges Monomer, ausgewählt aus der Gruppe bestehend aus Methyl(meth)acrylat, Äthyl(meth)acrylat, n-Butyl(meth)acrylat, Isobutyl(meth)acrylat, n-Hexyl(meth)-acrylat, 2-Äthylhexyl(meth)acrylat, Cyclohexyl(meth)acrylat, Benzyl(meth)acrylat, 2-Hydroxyäthyl(meth)-acrylat, 2-Hydroxypropyl(meth)acrylat, 2-Methoxyäthyl(meth)acrylat, 2-Äthoxyäthyl(meth)acrylat, Carbitol(meth)acrylat, Dipropylenglycolmonomethyläthermono(meth)acrylat, Triäthylenglycolmono-methyläthermono(meth)acrylat, Tetrahydrofuryl(meth)acrylat, Styrol, α-Methylstyrol, Vinyltoluol, Äthylen-glycoldi(meth)acrylat, Diäthylenglycoldi(meth)acrylat, Propylenglycoldi(meth)acrylat, 1,6-Hexan-dioldi(meth)acrylat, Neopentylglycoldi(meth)acrylat und Trimethylpropantri(meth)acrylat und/oder ein durch Strahlung polymerisierbares flüssiges Oligomer, ausgewählt unter ungesättigten Polyestern und Polyurethanen, wobei die Gesamtmenge aus der Komponente (b) und dem Monomer und/oder Oligomer geringer ist als 60 Teile pro 100 Gewichtsteile der gesamten Beschichtungsmasse.

3. Durch Strahlung härtbare Primer-Beschichtungsmasse nach Anspruch 1, worin die Komponente (a) ein Reaktionsprodukt der Epoxidverbindung mit Acrylsäure oder Methacrylsäure ist.

4. Durch Strahlung härtbare Primer-Beschichtungsmasse nach Anspruch 3, worin die Komponente (b) Dicyclopentenylacrylat, Dicyclopentylacrylat, Dicyclopentenyloxyäthylacrylat, Dicyclopentyloxyäthylacrylat, Dicyclopentenyloxyethoxyäthylacrylat, Dicyclopentyloxyethoxyäthylacrylat oder ein entsprechender Ester der Methacrylsäure ist.

5. Durch Strahlung härtbare Primer-Beschichtungsmasse nach einem der Ansprüche 1 bis 4, die zusätzlich einen Photosensibilisator aufweist.

6. Verfahren zur Herstellung einer Polyolefin-Schutzschicht auf einem Stahlsubstrat, wobei das Substrat mit einer modifizierten Polyolefin-Schicht und nachfolgend mit einer Polyolefin-Schutzschicht extrusionsbeschichtet wird, wobei die Verbesserung darin liegt, daß das Substrat mit einer Primärbeschichtung überzogen wird durch Auftragen der durch Strahlung härtbaren Beschichtungsmasse nach den Ansprüchen 1—5 und nachfolgend eine Bestrahlung mit aktinischer Strahlung vorgenommen wird.

7. Verfahren nach Anspruch 6, worin die aktinische Strahlung UV-Licht ist und die durch Strahlung härtbare Beschichtungsmasse nach Anspruch 5 verwendet wird.

8. Verfahren nach einem der Ansprüche 6 oder 7, wobei vor der Primerbeschichtung zusätzlich ein Konversionsüberzug auf das Substrat aufgetragen wird.

9. Verfahren nach einem der Ansprüche 6 bis 8, worin das Substrat ein Stahlrohr oder ein Stahlblech ist.

**Revendications**

1. Composition de revêtement de primaire durcissable par irradiation pour l'utilisation dans la formation d'un revêtement de polyoléfine sur un substrat d'acier, comprenant:

(a) le produit de la réaction d'un époxyde et d'un acide monocarboxylique à insaturation éthylénique, l'époxyde étant choisi parmi le produit de la réaction du bisphénol A et de l'épichlorhydrine ou de la méthylépichlorhydrine; le produit de la réaction du bisphénol A et/ou du bisphénol F, du résorcinol et de la (méthyl)épichlorhydrine; le produit de la réaction d'une novolaque ou d'un condensat phénol-formaldéhyde du type résol et de la (méthyl)épichlorhydrine; le produit de la réaction d'un polyol et de la (méthyl)épichlorhydrine; le produit de la réaction d'un polyacide et de la (méthyl)épichlorhydrine; et le produit de la réaction d'un polyalkylèneglycol et de la (méthyl)épichlorhydrine;

(b) composé répondant à la formule:

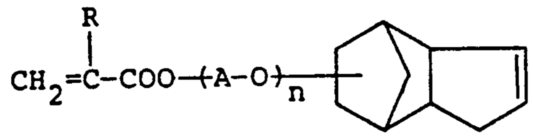

ou

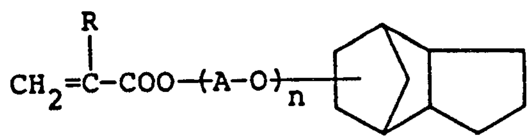

dans laquelle R est un atome d'hydrogène ou un groupe méthyle, A est un groupe alkylène en $C_2$—$C_4$ et n est 0, 1 ou 2; et

(c) époxyde tel que défini ci-dessus dans lequel le rapport de ce constituant (a) au constituant (b) au constituant (c) est de 40—80:20—60:1—15 en poids.

2. Composition de revêtement de primaire durcissable par irradiation suivant la revendication 1, comprenant en outre un monomère liquide polymérisable par irradiation choisi par le (méth)acrylate de méthyle, le (méth)acrylate d'éthyle, le (méth)acrylate de n-butyle, le (méth)acrylate d'isobutyle, le (méth)acrylate de n-hexyle, le (méth)acrylate de 2-éthylhexyle, le (méth)acrylate de cyclohexyle, le (méth)acrylate de benzyle, le (méth)acrylate de 2-hydroxyéthyle, le (méth)acrylate de 2-hydroxypropyle, le (méth)acrylate de 2-méthoxyéthyle, le (méth)acrylate de 2-éthoxyéthyle, le (méth)acrylate de carbitol, le mono(méth)acrylate de l'éther monométhylique du dipropylèneglycol, le mono(méth)acrylate de l'éther monométhylique du triéthylèneglycol, le (méth)acrylate de tétrahydrofuryle, le styrène, l'α-méthylstyrène, le vinyltoluène, le di(méth)acrylate d'éthylèneglycol, le di(méth)acrylate de diéthylèneglycol, le di(méth)acrylate de propylèneglycol, le di(méth)acrylate de 1,6-hexanediol, le di(méth)acrylate de néopentylglycol et le tri(méth)acrylate de triméthylpropane et/ou un oligomère liquide polymérisable par irradiation choisi parmi des polyesters insaturés et des polyuréthannes, dans laquelle la quantité combinée de ce constituant (b) et de ce monomère et/ou de cet oligomère est inférieure à 60 parties pour 100 parties en poids de la composition entière.

3. Composition de revêtement de primaire durcissable par irradiation suivant la revendication 1, dans laquelle ce constituant (a) est le produit de la réaction de cet époxyde et de l'acide acrylique ou de l'acide méthacrylique.

4. Composition de revêtement de primaire durcissable par irradiation suivant la revendication 3, dans laquelle ce constituant (b) est l'acrylate de dicyclopentényle, l'acrylate de dicyclopentyle, l'acrylate de dicyclopenténlyloxyéthyle, l'acrylate de dicyclopentyloxyéthyle, l'acrylate de dicyclopenténlyloxyéthoxy-éthyle, l'acrylate de dicyclopentyloxyéthoxyéthyle ou les esters correspondants de l'acide méthacrylique.

5. Composition de revêtement de primaire durcissable par irradiation suivant l'une quelconque des revendications 1 à 4, comprenant en outre un photosensibilisant.

6. Dans un procédé de formation d'un revêtement protecteur de poly-oléfine sur un substrat d'acier comprenant les stades de revêtement par extrusion du substrat d'une couche de polyoléfine modifiée, puis d'une couche protectrice de polyoléfine successivement, l'amélioration dans laquelle on applique à ce substrat un revêtement de primaire en appliquant la composition durcissable par irradiation des revendications 1 à 5, puis en l'irradiant avec un rayonnement actinique.

7. Procédé suivant la revendication 6, dans lequel ce rayonnement actinique est la lumière ultraviolette, et dans lequel on utilise la composition durcissable par rayonnement de la revendication 5.

8. Procédé suivant les revendications 6 ou 7, comprenant en outre le stade consistant à appliquer un revêtement de conversion sur le substrat avant l'application de ce revêtement de primaire.

9. Procédé suivant l'une quelconque des revendications 6 à 8, dans lequel ce substrat est un tuyau d'acier ou une tôle d'acier.